# EUROPEAN PATENT APPLICATION

(11) **EP 4 775 494 A1**
(43) Date of publication of application: **15.07.2026**
(21) Application number: 25150800.8
(22) Date of filing: 08.01.2025
(51) Int. Cl.: B64F 1/36

(54) **METHOD FOR IMPLEMENTING A SECURITY SCREENING INSTALLATION AND TO A SECURITY SCREENING INSTALLATION**

(71) Applicant: Selfcair UK Ltd, Marshland St. James Wisbech Cambridgeshire PE14 8JT (GB)
(72) Inventor: DOWE, Andrew, Kings Lynn, Norfolk, PE34 4RG (GB)
(74) Representative: Tranvouez, Edern Morgan

(57) **Abstract**

The invention relates to a method for implementing a security screening installation (100). The security screening installation (100) comprise divest lane (110), a screening device (120) feed by the divest lane (110A), and a sensor (117A, 117B) installed on the at least one divest lane (110A) and configured to determine a state of packing of a tray (115A, 115B, 155C). The method comprises the following step: Detect using the sensor (117A, 117B) if at least one tray (115A, 115B, 115C) has been incorrectly packed by identifying at least one from: an overheight object on a tray (115A, 115B, 115C), an object hanging out of a tray (115A, 115B, 115C), items that are loose on top of a tray (115A, 115B, 115C).

## Description

### Technical field

The present invention relates to security screening access points for sensible building such as airport or public buildings.

The invention more specifically concerns a method for implementing a security screening installation and a security screening installation.

### Previous art

Security screening installations are usually used to control access of sensible buildings such as airport, seaport, railway station, public and government buildings in order to prevent ill-intentioned person to introduce forbidden items, such as weapons, explosive devices and biohazard products.

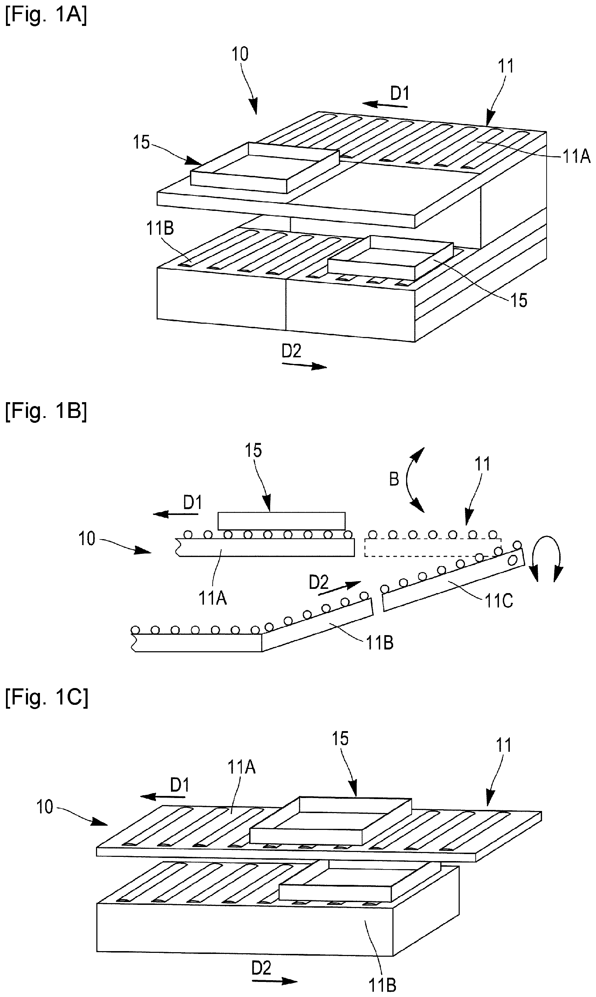

Actual security screening installations include at least one divest lane for users to put their belongings into trays, at least on screening device feed by the at least one divest lane with the trays. Figures 1A to 1E show schematically usual conformations of security screening installations 10 and in particular of their divest lanes 11. Please note that in theses figures, D1 relates to the divest direction of the divest lane 11 for feeding the packed trays 15 to the screening device 12, D2 relates to the return direction of the trays 15 for bringing back the trays 15 to the divest lane after the user's belonging have been screened and retrieved. Has shown, more specifically:
- figure 1A shows a divest lane 11 of a security screening installation 10 which used a parallel divest configuration for said divest lane 11, the divest lane 11 comprising a forward conveyor 11A feeding the screening device 12 and a return conveyor 11B for the return of trays 15 after the belongings have been retrieved by the users. Whith such security screening installation 10, each user occupies one of the divest positions and removes a tray 15 from the lower section, i.e. from the return end of the return conveyor 11B, placing it on the topside where they can start divesting into the tray 15. When the tray 15 is fully packed, the user has to wait for a gap between the other trays 15 to place the tray 15 on the forward conveyor 11A to be feed to the screening device 12;
- figure 1B, shows a divest lane 11 of a security screening installation 10 which used a serial divest conformation for said divest lane 11. In such a configuration, the trays 15 are automatically delivered to the users. The divest lane 11 includes a pivotting conveyor 11C that lowers to collect a tray 15 from the return conveyor 11B and then drives up to the horizontal position. When there is space to drive the tray out, the pivotting conveyor 11C repeats the process. Such configuration has a smaller foot print and so allows save space which is critical in some areas.

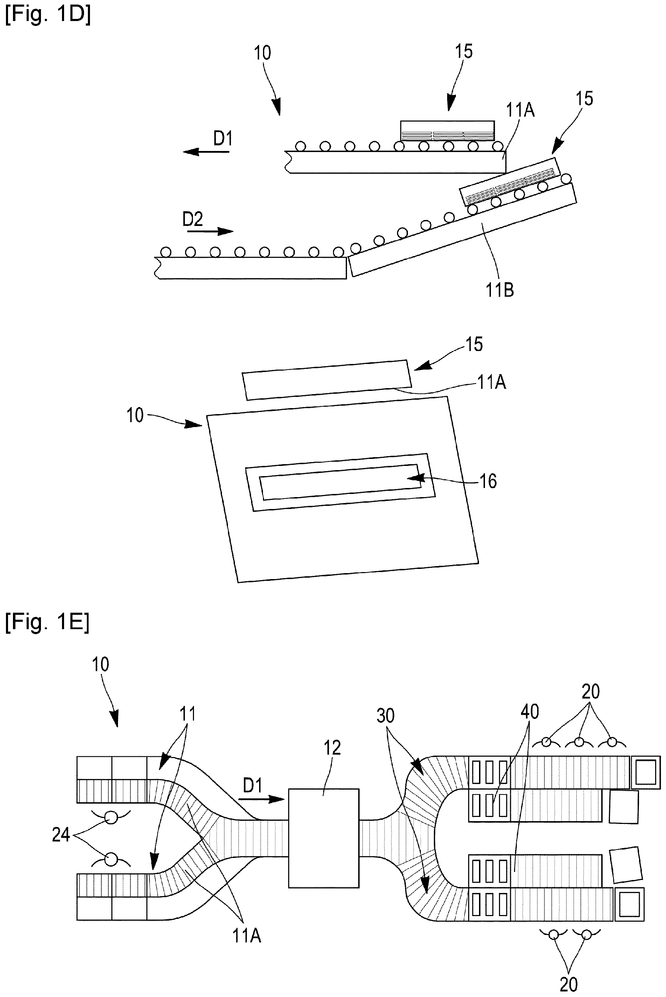

- Figure 1C shows a divest lane 11 of a security screening installation 10 which used a multi-serial divest system for said divest lane. This conformation is similar to the one shown on figure 1. In this conformation more than one user is allowed to divest their belongings into trays 15, the users being encouraged to move forward with their tray along the divest zone.
- Figure 1D shows, in a side and a front view a divest lane 11 of a security screening installation 10 which used a letter box conformation for said divest lane 11, the trays being delivered to the user through a "letter box". This conformation is similar to the one of figure 1C at the difference that there is no pivoting conveyor, the tray 15 stays on the incline which protrudes from the end of the lane delivered through a "letter box" hole 16.
- Figure 1E shows, In a top view, a security screening installation 10 with a twin lane conformation. This conformation is currently considered as lower cost way of processing higher users numbers. The process is very similar to the parallel divest (the one according to figure 1A) but the two sides feed into one section to enable the trays 15 to be screened. After screening, the trays 15 are split into their relevant sides of the delivery lane 30. Furthermore, in figure 1E, it has been shown, as illustration, two search lanes 40 it is also possible to have only one single search spine down the middle.

If such security installations are needed, they are all known to have major issues regarding efficiency for screening of user's belongings. Indeed, any tray packed incorrectly could interfere with the screening device and could need to stop the entire screening installation for many minutes in order to allow intervention on the device.

In order to avoid such issues and limit the consequence of the stopping time of the screening device, the security operation is often oversized by implementing more security lanes and screening devices than required than if the twin lane was used allowing the operation to divert the users to an alternative divest lane during the stopping time. Such a solution is costly, and it also needs an increased number of staffs 24 to run the security screening installation and requires more maintenance.

### Presentation of the invention

The invention aims to resolve the above problem and is aiming to provide a security screening installation that is more efficient than the one of the previous art.

The invention relates on a method for implementing a security screening installation, the security screening installation comprising at least one divest lane for users to put their belongings into trays, at least on screening device feed by the at least one divest lane with the trays, and at least one sensor installed on the at least one divest lane and configured to determine a state of packing of a tray,
wherein the method for implementing a security screening installation comprises the following steps:
D. Make the users to put their belongings into trays on the at least one divest lane,
E. Detect using the at least one sensor if at least one tray has been incorrectly packed by identifying at least one from:
   ∘ an overheight object on a tray,
   ∘ an object hanging out of a tray,
   ∘ items that are loose on top of a tray,
G. if an incorrectly packed tray is detecting, stop the corresponding divest lane,
H. restart the corresponding divest lane when, by using the at least one sensor, the incorrectly packed tray has been detected correctly packed.

With such a method, all the problems regarding an incorrectly packed tray are avoided at the beginning of the divest lane and does not affect the screening device. In this way the stopping time of the security screening installation is reduced since it is easier to correct the problem at the beginning of the divest lane than when it occurred in the screening device. Indeed, an intervention in the screening device is time consuming and can stop the whole security screening installation for several minutes or even several tens of minutes. With the method of the invention, if a potential problem is identified, it is possible to only stop the corresponding divest lane during the time for a staff member to intervein and correct the potential issue.

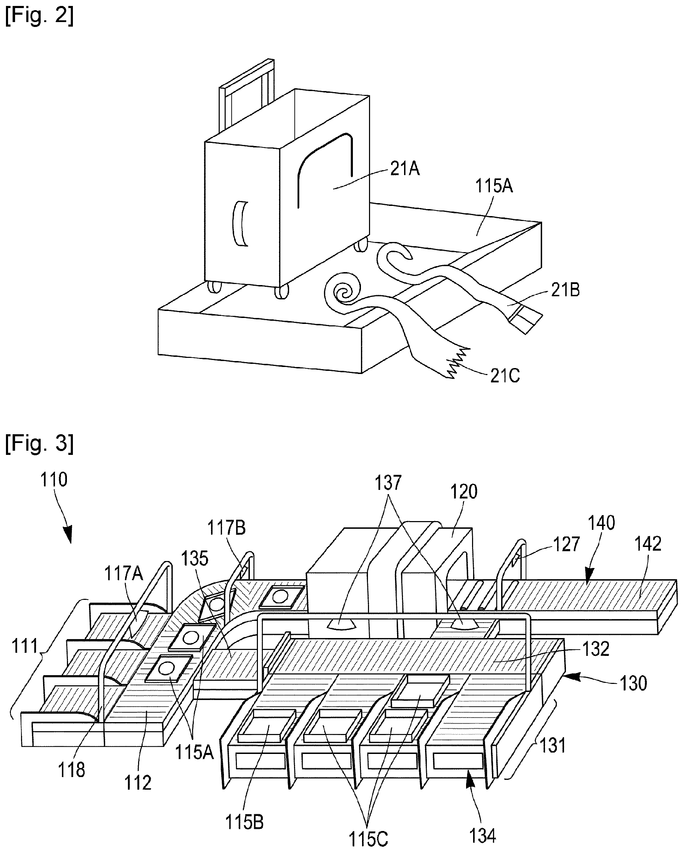

Figure 2 shows some of the incorrect packing of a tray that could be avoided thanks to the invention. In particular, the method of the invention could allow to:
- avoid the arrangement of an overheight object on a tray, such as a luggage 21A placed in a standing position instead of a lying down position, such object could potentially be blocked at the entrance of the screening device,
- avoid objects that hanging out of a tray and that could potentially be caught in a roller (on the divest lane or in the screening device), such as a belt 21B or scarf 21,
- avoid the lost of a object, such as a passport or a boarding pass, that are loose on top of a tray.

It has to be note that avoid any object kepted loose on top of a tray, not only avoid problem with the security screening installation but also avoid problem regarding the following movement of the user that could potentially lose the object since this object is more than likely necessary for the user.

The at least one divest lane may include conveyor elements, such as rollers, for displacing the trays from a corresponding divest zone to the at least one screening device, the method for implementing a security screening installation further comprising, before the step F. of stopping the corresponding divest lane, the following step:
F. detect using the at least one sensor a user's hand entering a danger zone defined around the conveyor elements of the at least one divest lane,
wherein:
- during the step G. the corresponding divest lane is stopped if a hand entering a danger zone has been detected during step F.,
- During the step H., if the corresponding divest lane has been stopped when a hand entering a danger zone has been detected during step E., the corresponding divest lane is restarted when a removing of the hand from the danger zone has been detected using the at least one sensor.

With such a step. F., it is possible to avoid injury risk for the hand of the users and of the staff number and so increase the safety of the security screening installation according to the invention.

The security screening installations may comprise at least one reading device for reading at least one document relative to the user before the user access to the at least one divest lane, and at least one display for displaying information regarding the at least one divest lane ,

The method for implementing a security screening installation further comprising the following step:
A. when the at least one reading device reads the at least one document relative to the user, identify a language relative to the document relative to the user,
B. detecting when the user is looking on the at least one display,
C. when the user is detecting has looking to the at least one display, display information regarding the at least one divest lane in the identified language through the at least one display.

With such identification and displaying, the user is guided in its own language allowing to increase the efficiency of the divesting of the belonging on the divest lane.

the security screening installation may comprise at least two divest lanes and at least one respective sensor for each divest lane, and wherein during the step C. of displaying information, the user is directed to one of the at least two divest lanes based on the information provided by the respective sensor of the at least two divest lanes.

With such configuration, it is possible to improve automatically the repartition of the users regarding the divest lanes.

The installation may further comprise at least one delivery lane for delivering the trays to the users after the trays has been screened through the screening device, and at least one secondary sensor installed on the at least one delivery lane, in step D. when the users put their belongings into trays, each tray is associated with the user who had put is belongings in it, The method further comprising the following step:
I. After a tray has been screened through the screening device and has been delivered through the at least one delivering lane, for each tray, detect if the user (20) that discharge said tray is the one associated with it,
J. If a tray is detected as discharged by a user that is not associated with it, provide a warning regarding a potential theft of the belongings of a user.

In this way it is possible to avoid the theft of the belongings of the users.

The invention also relates to a security screening installation comprising:
- at least one divest lane for users to put their belongings into trays,
- at least one screening device (120) feed by the at least one divest lane with the trays,
- at least one sensor installed on the at least one divest lane,
   the at least one sensor being configured to determine a state of packing of a tray, and the security screening installation further comprises at least one control unit configured to control the at least one divest lane and to connect to the at least one sensor,
   the control unit being further configured for:
      - after the user has put its belongings into trays on the divest lane, checking through the connection with the at least one sensor if that at least one tray have been incorrectly packed by identifying at least one from:
         ∘ an overheight object on a tray,
         ∘ an object hanging out of a tray,
         ∘ items that are loose on top of a tray,
      - if an incorrectly packed tray is identified, stopping the corresponding divest lane,
      - to restart the corresponding divest lane when, by using the at least one sensor, the incorrectly packed tray has been detected correctly packed.

Such security screening installation makes it possible to implement the method of the invention and to derive the benefit therefrom.

The at least one sensor may comprise a camera installed above the divest lane, the control unit being configured to detect based on image recognition the packing state of a tray.

The at least one divest lane may comprise rollers for feeding the trays after users have put their belongings into trays and wherein the at least one sensor is also configured to identify the distance between two trays during the feeding of the trays to the screening device, at least one control unit being configured to control the velocity of the rollers at least partially based on the distance between two trays determined using the at least one sensor.

With such configuration, it is possible to use the sensor according to the invention to reduce the distance between two trays and so to increase the number of trays that could be screened by the screening device.

The at least one divest lane may comprise conveyor elements, such as rollers, for feeding the trays after users have put their belongings into trays and wherein the at least one sensor is also configured to detect hand entering a danger zone defined around the conveyor elements of the at least one divest lane,
the control unit being further configured to:
- detect using the at least one sensor if a hand entering the danger zone defined around the conveyor elements,
- stop the corresponding divest lane if a hand has been detected entering the danger zone defined around the conveyor elements,
- restart the corresponding divest lane when a removing of the hand from the danger zone has been detected using the at least one sensor.

The security screening installation may comprise at least one reading device for reading at least one document relative to the user before the user access to the at least one divest lane, and at least one display for displaying information regarding the at least one divest lane,
the control unit being further configured to connect to the reading device and to control the displaying of the at least one display, and
the control unit being further configured to
   - when the at least one reading device reads the at least one document relative to the user, identify a language relative to the document relative to the user,
   - detect when the user (20) is looking on the at least one display,
   - when the user is detecting has looking to the at least one display, display information regarding the at least one divest lane in the identified language through the at least one display.

The security screening installation may further comprise at least one delivery lane for delivering the trays to the users after the trays has been screened through the screening device, and at least one secondary sensor installed on the at least one delivery lane, the control unit being further configured to connect to the at least one secondary sensor,
the control unit being further configured to,
- when the users put their belongings into trays, each tray is associated with the user who had put is belongings in it using the at least one sensor,
- After a tray been screened through the screening device and has been delivered through the at least one delivering lane, for each tray, detect, using the at least one secondary sensor, if the user that discharge said tray is the one associated with it,
- If a tray is detected as discharged by a user that is not associated with it, provide a warning regarding a potential theft of the belongings of a user.

The security screening installation may further at least one delivery lane for delivering the trays to the users after the trays has been screened through the screening device, and at least one secondary sensor installed on the at least one delivery lane, the delivery lane including several delivery emplacements, the control unit being further configured to connect to the at least one secondary sensor and to control the delivery lane,
the control unit being further configured to,
- when the users put their belongings into trays, each tray is associated with the user who had put is belongings in it using the at least one sensor,
- After a tray has been screened through the screening device, by using the secondary sensor identify on which delivery emplacement the corresponding user is located, and deliver through the at least one delivery lane the tray to said delivery emplacement.

With such configurations, it is possible to avoid the theft of the belongings of the users

Each tray may comprise a tag, such as a RFID tag or QR code tag, the at least one sensor and the at least one secondary sensor being configured to read the tag of trays in order to associate a tray with a user.

the at least one sensor and the at least one secondary sensor may be configured to identify a tray based on the user's belongings and their arrangement into the tray.

The at least one sensor and the at least one secondary sensor being configured to identify a user based on facial recognition.

### Brief description of the drawings

The present invention will be better understood on reading the description of exemplary embodiments, given for purely indicative purposes and in no way limiting, with reference to the appended drawings in which:
- figure 1A to 1E shows examples of security screening installations, and more specifically of their divest lane, according to the previous art;
- Figure 2 shows an example of incorrectly packed tray,
- Figure 3 shows a security screening installation according to the invention,
- Figure 4 shows a block diagram of a security screening installation according to the invention,
- Figure 5 shows an illustration of the detection of a hand of entering a danger zone defined around conveyor elements using a sensor according to the invention,
- Figure 6 shows the equipment of a divest lane of the security screening installation with a sensor,
- Figures 7A and 7B shows respectively a side view and a top view of an access gate of a security screening installation of the invention that includes a reader for personal documents, such as an ID or a boarding pass and a display for displaying information regarding the divest lane,

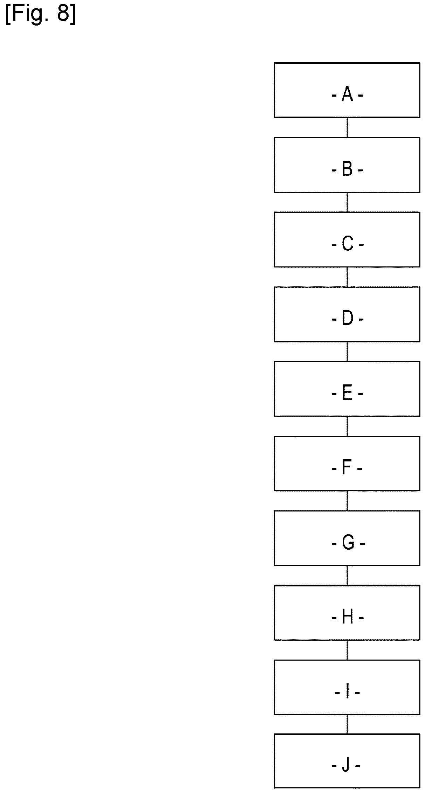

- Figure 8 is a flowchart of the steps of a method for implementing a security screening installation according to the invention,
- Figure 9 shows a conveyor of a divest lane of the invention equipped with sensors according to the invention,
- Figure 10 shows a divest conveyor and a delivering conveyor both equipped with sensors allowing to determine the distance between tow consecutive trays,
- Figure 11 shows an alternative of a supporting frame for a sensor according to the invention.

Identical, similar or equivalent parts of the different drawings bear the same numerical references so as to facilitate the transition from one figure to another

The different parts represented in the drawings are not necessarily on a uniform scale, to make the drawings more readable.

The different possibilities (variants and embodiments) must be understood as not being exclusive of each other and can be combined with each other.

### Detail description of specific embodiments of the invention

Figure 3 shows a security screening installation 100 according to the invention including sensors 117A, 117B installed on the divest lane 110 in order to allow the implementation of the method of the invention.

According to the invention, the security screening installation 100 comprises:
- a divest lane 110 for users 20 to put their belongings into trays 115A, 115B, 115C,
- at least on screening device 120 feed by the at least one divest lane 110A with the trays 115A, 115B, 115C,
- a screening device 120 feed by the divest lane 110A with the trays 115A, 115B, 115C,
- sensors 117A, 117B installed on the divest lane 110, at least one of the sensors 117A, 117B being configured to determine a state of packing of a tray 115A, 115B, 155C,
- a delivery lane 130 for delivering the trays 115A, 115B, 115C to the users after the trays 115A, 115B, 115C has been screened through the screening device 120,
- secondary sensors 137 installed on the at least one delivery lane 130,
- a search lane 140 on which the trays 115A, 115B, 115C are delivered if it is determined during the screening by the screening device 120 that the user's belonging had to be inspected,
- a third sensor 127 installed between the screening device 120 and the search lane 140.

As shown in figure 3, the divest lane 110 includes a divest zone 111 including 3 different emplacements for the user to put their belongings into trays 115A, 115B, 115C. When a tray 115A, 115B, 115C is fully packed, the user can put the tray 115A, 115B, 115C on a divest conveyor 112 that delivers the tray to the screening device 120. In the present embodiment, the divest lane 110 being of the letter box type, each divest emplacement of the divest zone 111 includes a "letter box" hole for the user to take tray. In this configuration, the trays 115A, 115B, 115C are provided by a return conveyor 135 that returns the trays from the delivery lane 130 after they have been emptied by the user.

As shown in figure 3, in the present embodiment, the divest conveyor 112 and the return conveyor 135 are of the roller type conveyor and so are comprising rollers with at least one motorized roller for controlling the movement of the trays along said conveyor. As an alternative at least one of the divest conveyor 112 and of the return conveyor 135 could comprise at least one conveyor belt. Such rollers and belts form conveyor elements.

In the present embodiment, one sensor 117A is installed above the divest zone 111 to cover all three divest emplacements. The installation of this sensor 117A above the divest zone 111 is obtain by the means of an invert U shaped frame installed at the border between the divest emplacements and the divest conveyor 112, the sensor 117A being fixed on the base of the "U" facing the divest zone. According to the invention, with such arrangement, only one sensor 117A is required to determine the state of packing of all trays 115A, 115B, 155C packed into the divest zone 111.

The sensor 117A installed on the divest zone 111 could comprise at least one camera configured to allow detecting packing state of a tray 115A, 115B, 115C based image recognition the packing state of a tray 115A, 115B, 115C.

The divest lane 110 also comprises another sensor 117B installed above the divest conveyor in order to also confirm the packing state of a tray 115A, 115B, 115C and to detect if a belonging would be lost on the conveyor. Similarly to the sensor 117B of the divest zone 117A, the other sensor 117B is installed above the divest conveyor 112 using an invert U shaped frame. This second invert U shaped frame is installed in such a way that the divest conveyor extends between the arms of the invert U shape and therefore that all the trays 115A, 115B, 115C pass between the arms of the invert U before being delivered to the screening device 120. The other sensor 117B is fixed on the on the base of the "U" facing the divest conveyor 112.

In a similar way than the sensor of the divest zone 111, in the present embodiment the secondary sensors 137 is installed on the delivery lane 130 between a delivery conveyor 132 and a delivery zone 131 In this way, each tray 115A, 115B, 115C could be identified before being delivered to the delivery zone 131. As shown in figure 3, the delivery zone 131 includes four emplacements in order to allow four users to recover their belonging after the screening. After having recovered their belongings, the user could place the emptied tray 115A, 115B, 115C in holes 134 that lead to the return conveyor 135. In this way, the emptied tray 115A, 115B, 115C could be sent back to the divest station.

It as to be note that if in the present embodiment, the delivery conveyor is of the roller type conveyor, it could also comprise, at an alternative at least one conveyor belt.

If during the screening, the belongings of a user have to be further inspected, the corresponding tray is delivered to the search lane 140 that includes a search conveyor 152 of the roller type (as an alternative the search conveyor could comprise a conveyor belt). Similarly to other sensor 117B, the third sensor 127 is installed above a search conveyor 122 in order to allow each tray to be inspected to pass through the third sensor 127.

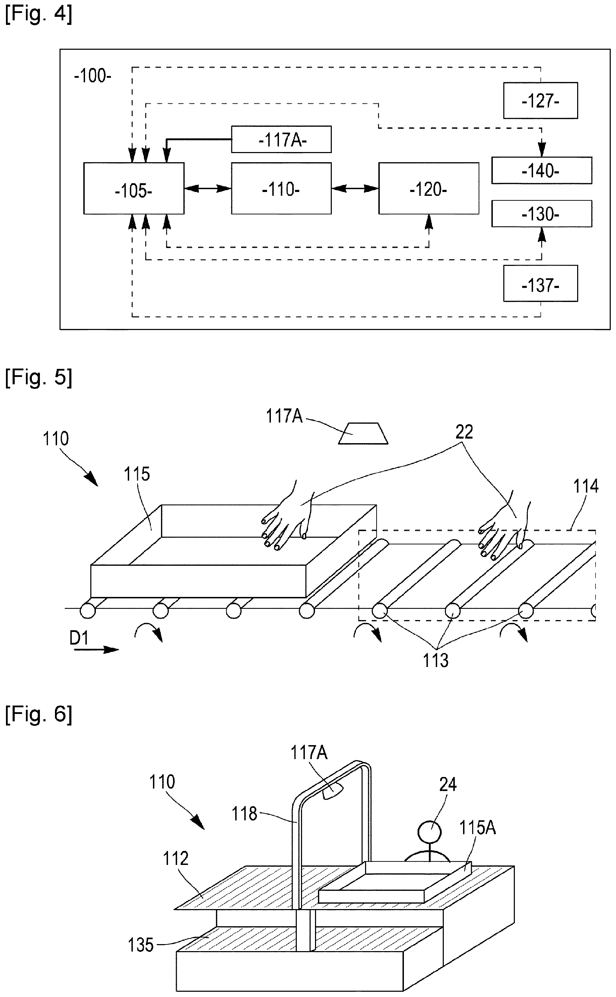

As shown on the block diagram of figure 5, the security screening installation 100 according to the invention also comprise a control unit 105 configured to control the at least one divest lane 110 and to connect to the sensor 117A of the divest zone 111 and the other sensor 117B of the divest conveyor. According to the invention, the control unit 105 is further configured for further configured for:
- after the user 20 has put its belongings into trays 115A, 115B, 115C on the divest lane 110, checking through the connection with the sensors 117A, 117B if that at least one tray 115A, 115B, 115C have been incorrectly packed by identifying at least one from:
   ∘ an overheight object 21A on a tray 115A, 115B, 115C,
   ∘ an object hanging 21B, 21C out of a tray 115A, 115B, 115C,
   ∘ items that are loose on top of a tray 115A, 115B, 115C,
- if an incorrectly packed tray 115A, 115B, 115C is identified, stopping the corresponding divest lane 110 or more specifically the corresponding digest conveyor 112,
- to restart the corresponding divest lane 110, or more specifically the digest conveyor 112, when, by using the at least one sensor 117A, 117B, the incorrectly packed tray 115A, 115B, 115C has been detected correctly packed.

In order to obtain a quick correction of the packing problem, when an incorrectly packed tray 115A, 115B, 115C is identify, the control unit 105 could also be configured for providing an indication, such as a visual or audible alarm, regarding the identification. In this way, the user 20 or a staff member 24 could correct the packing of the tray 115A, 115B, 115C identified as incorrectly packed and thus allow the divest lane 110 to restart quickly.

In this configuration, as shown on the bock diagram of figure 4 by the arrow in solid lines, the control unit only control the divest lane 110 (and more specifically the divest conveyor) and is connect to the sensor 117A (and the other sensor 117B) in order to control the packing status of the trays 115A, 115B, 115C. As it will describe in the following and as it is shown in dotted lines, according to the invention, the control unit 105 could also be configured to:
- control the screening device 120, or more specifically a conveyor of the screening device 120, and to connect with the third sensor 127, and/or
- control the search lane 140, and more specifically the search conveyor 142, and/or
- control the delivery lane 130, and more specifically the delivery conveyor 132, and to connect with the second sensor 137.

With such configuration regarding the other lanes 130, 140 and of the screening device 120 of the security screening installation 100, it allows to use the control unit 105 to optimize the installation according to the invention. As an example, since the search lane 140 and the delivery lane also comprise sensors 127, 137 according to the invention, it is possible to identify if a belonging of a user 20 has fallen during the displacement of the tray 115A, 115B, 115C.

Similarly, based on the sensors 117A, 117B, 127, 137, it is possible to detect theft of a user's belongings. In this way, the control unit 105 could be configured to:
- when the user 20 put their belongings 21A, 21B, 21C into trays 115A, 115B, 115C each tray 115A, 115B, 115C is associated with the user who had put is belongings in it using the sensor 117A of the divest zone 111,
- after a tray 115A, 115B, 115C has been screened through the screening device 120 and has been delivered through the at least one delivering lane 140 to the delivery zone, for each tray 115A, 115B, 115C, detect, using the secondary sensors 137, if the user 20 that discharge said tray is the one associated with it,
- If a tray 115A, 115B, 115C is detected as discharged by a user 20 that is not associated with it, provide a warning regarding a potential theft of the belongings of a user 20.

The identification of the user could be done, for example, by facial recognition or another type of recognition such as based on infrared sensor, through the sensors 117A, 127, 137 or could base on other personal recognition. The identification of a tray 115A, 115B, 115C could be done either by:
- image recognition of the user's belongings and their arrangement into the tray 115A, 115B, 115C,
- tag reading, each tray 115A, 115B, 115C comprising a tag, such as a RFID tag or QR code tag, the sensor 117A of the divest zone 111 and the sensors 137 being configured to read the tag of trays 115A, 115B, 115C in order to associate a tray 115A, 115B, 115C with a user 20.

In the present embodiment, since the sensor 117A of the divest zone 111 and the sensors 137 of the delivery zone 131 comprises camera, the identification of the trays 115A, 115B, 115C is done by image recognition or using QR code reading. As an alternative, the sensor sensor 117A of the divest zone 111 and the sensors 137 could also comprise another type of sensor, such as a RFID reader, in order to read a tag of the trays 115A, 115B, 115C is or of the user 20 in order to allow the identification of the trays 115A, 115B, 115C and/or the user 20.

As shown on figure 5, the sensors 117A, 117B, 127, 137 of the invention could also be used to secure the conveyor 112, 132, 142 of the invention and avoid a user 20 and/or a staff member to have their hand 22 injured. In this way, the control unit 105, through the connection to the sensors 117A, 117B, 127, 137, could further configured for:
- detect using the at least one sensor if a hand 22 entering the danger zone 114 defined around the conveyor elements,
- stop the corresponding lane 110, 130, 140, and more specifically the corresponding conveyor 112, 132, 142, if a hand has been detected entering the danger zone 114 defined around the conveyor elements,
- restart the corresponding lane 110, 130, 140 when a removing of the hand 22 from the danger zone 114 has been detected using the at least one sensor 117A, 117B, 127, 137.

It has to be noted that if this possibility could be implemented for all the lanes 110, 130, 140 of the security screening installation 100 as explained above, it could also be implemented only on divest lane 110 as shown in figure 5. In this way it is possible to benefit of both the packing verification and a safe installation only by equipping the divest lane 111 with sensors 117A, 117B according to the invention. This possibility is shown in figure 6, for which only the digest conveyor 112 comprised a sensor 117A that checks the packing status of all the trays after they have been put by the users on the divest conveyor. As an alternative of the present embodiment, it is possible to benefit from the invention using only one sensor 117A installed on the divest conveyor 112. Similarly, it is possible to just equip the divest zone, in a similar configuration of the sensor 117A of the divest zone 111 shown on figure 3, to be able to achieve the checking the packing status of all the trays after they have been put by the users 20 on the divest conveyor 112.

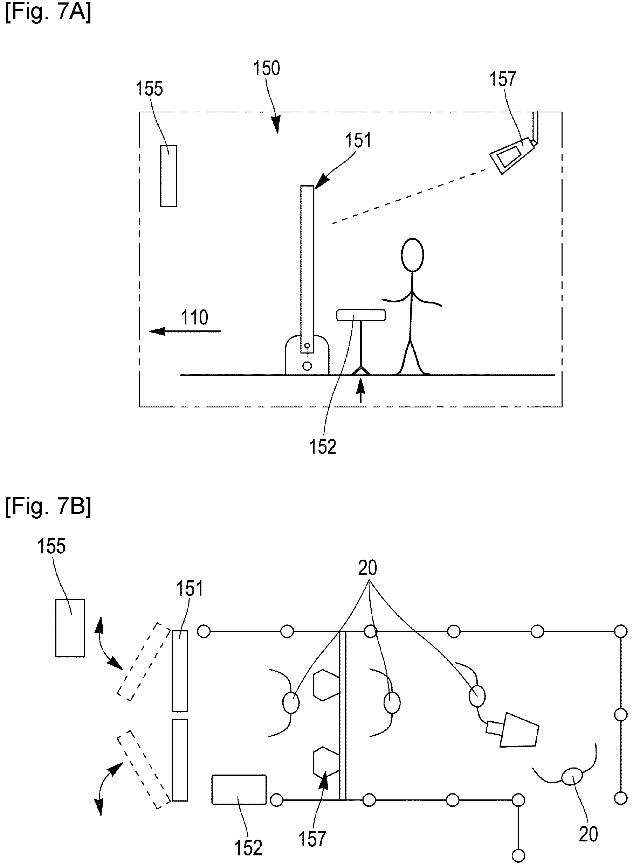

According to a possibility of the invention, as shown on figure 7A and 7B, the security screening installation 100 could further comprising a reading device 152 for reading a document relative to the user 20 before the user 20 access to the divest lane 110, and a display 155 for displaying information regarding the divest lane 110. Control unit 105 could further be configured to connect to the reading device 152 and to control the displaying of the at least one display 155. Furthermore, the control unit could be further configured to
- when the reading device 152 reads the document relative to the user 20, identify a language relative to the document relative to the user 20,
- detect when the user 20 is looking on the at least one display 155,
- when the user 20 is detecting has looking to the display 155, display information regarding the at least one divest lane 110 in the identified language through the at least one display 155.

With this possibility, the information regarding the divest lane 110 is shown in a language specific to the user and the user 20 is thus more likely to follow the displayed instruction than if it is provided in a foreign language or in multiple languages. In a typical configuration of the invention, the reading device equipped an access point 150 of the security screening installation where the user 20 as to scan one of its personal documents, such as an ID document a boarding pass or a any documents required to enter the building secured by the security screening installation 100. Indeed, the user 20 is usually required to scan a personal document in order to have the door 151 leading to the rest of the security screening installation 100 to opened.

In order to identify the user 20 and to associate the identified language to the user 20, the access point could also comprise an access point sensor 157. The assess point sensor 157 could be configured to identify the user by, for example, facial recognition or another type of recognition such as based on infrared sensor. The access point sensor 157, or another sensor associated to the display 155, is also configured, based on image recognition, to detect when the user looks to the display in order to display the information regarding the divest lane 110.

According to this possibility of the invention, the information regarding the divest lane 110 that is displayed on the display 155 could be:
- Information regarding the divest procedure for putting their belongings on the trays 115A, 115B, 115C, such as the type of belongings that has to be put visible on the trays 115A, 115B, 115C,
- When the security screening installation 100 has a plurality of divest lanes 110, divest zones 111, and/or divest emplacements, an indication regarding the divest lane 110, divest zone 111 and/or divest emplacement where the user 20 should divest its belongings,
- Information on an eventual problem regarding the document relative to the user.

Of course, if in figures 7A and 7B, there is only one display 155 arranged just after the doors 151 of the access point 150, it is possible, according to the invention, that the security screening installation comprised multiple displays 155 to guide the user 20 in its own language during all the screening process.

According to the invention, the control unit could be configured to adapt the displayed information according to the information obtained by the sensors 117A, 117B, 127, 137. In particular, the control unit could direct the user to a second divest lane 110 when the sensors 117B of the divest conveyor 112 of a first lane 110 allow to identify a bottleneck of said divest conveyor 112.

The security screening installation of this first embodiment allows the implementation of a method according to the invention. The method for implementing such installation comprises the following steps:
A. when the at least one reading device 152 reads the at least one document relative to the user 20, identify a language relative to the document relative to the user 20,
B. detecting when the user (20) is looking on the at least one display 155,
C. when the user (20) is detecting has looking to the at least one display 155, display information regarding the at least one divest lane 110 in the identified language through the at least one display 155.
D. Make the users 20 to put their belongings into trays 115A, 115B, 115C on the at least one divest lane 110, wherein during the putting of the belongings into trays 115A, 115B, 115C each tray 115A, 115B, 115C is associated with the user 20 who had put is belongings in it,
E. Detect using the sensors 117A, 117B of the divest lane 110 if at least one tray 115A, 115B, 115C has been incorrectly packed by identifying at least one from:
   ∘ an overheight object on a tray 115A, 115B, 115C,
   ∘ an object hanging out of a tray 115A, 115B, 115C,
   ∘ items that are loose on top of a tray 115A, 115B, 115C,
F. detect using the at least one sensor a hand 22, of a user 20 or of a staff member 24, entering a danger zone 114 defined around the conveyor elements 112 of the divest lane 110,
G. if an incorrectly packed tray 115A, 115B, 115C is detecting during step E. or if a hand entering a danger zone has been detected during step F, stop the corresponding divest lane 110 and more specifically the corresponding divest conveyor 112,
H. restart the corresponding divest lane 110, and more specifically the corresponding divest conveyor 112, when, by using the sensors 117A, 117B of the divest conveyor 111, the incorrectly packed tray 115A, 115B, 115C has been detected correctly packed or a removing of the hand 22 from the danger zone 114 has been detected
I. .After a tray 115A, 115B, 115C has been screened through the screening device and has been delivered through the at least one delivering lane, for each tray 115A, 115B, 115C, detect if the user 20 that discharge said tray is the one associated with it,
J. If a tray 115A, 115B, 115C is detected as discharged by a user 20 that is not associated with it, provide a warning regarding a potential theft of the belongings of a user 20.

As already mentioned, and discussed regarding figure 6, the invention could be implemented and configured for just a part of the security screening installation 100. In the same way, just a part of the method could be implemented, without departing the scope of the invention. As an example, when only the divest lane 110 is equipped with sensors 117A, 117B, it is possible to implement only steps D to H. of the method. It is also to be noted that in the above method, the detection of hand of step F. is only mentioned in relation to the divest lane 110, it is also possible to implement similar detection for the delivery lane 130, the search lane 130 and eventually the return lane 135, the corresponding lane being stop in case of such a detection.

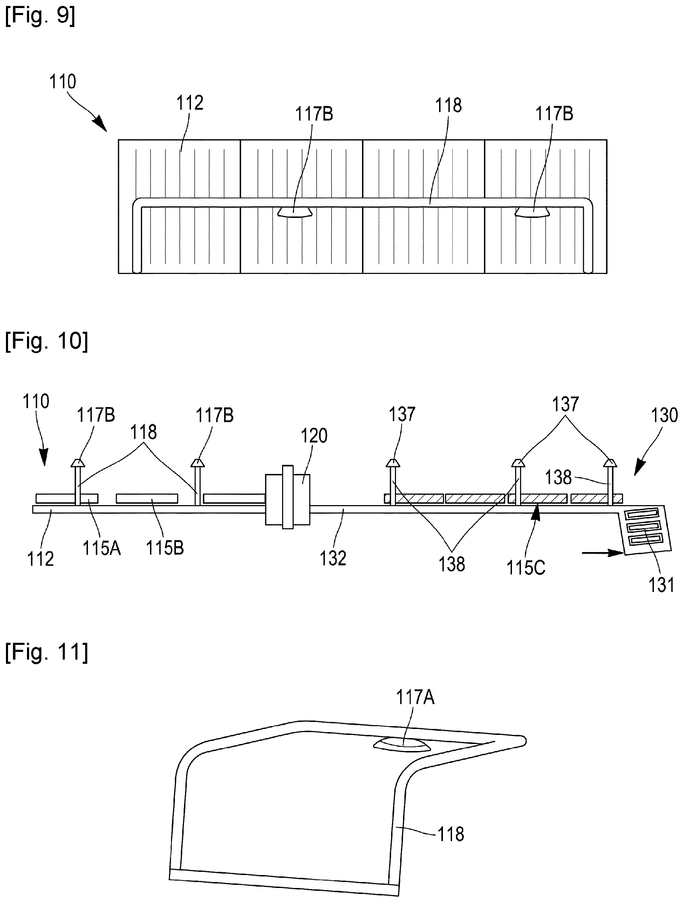

Furthermore, as shown in figures 9 ad 10, by providing a conveyor, such as the divest conveyor 112 and the delivery conveyor 132, with sensor 117B, 137 according to the invention, it is possible to use the sensor 117B, 127 to control the movement of the trays 115A, 115B, 115C relative to each other. Indeed, in conventional conveyor, the conveyor comprises sensors arranged below the rollers to specifically control the velocity of rollers and so the distance between two consecutive trays 115A, 115B, 115C. With such conventional sensors, the distance between two consecutive trays is relatively important since such sensor detects the space between the trays 115A, 115B, 115C. By using the sensor 117B, 127 to control the movement of the trays 115A, 115B, 115C relative to each other, it is possible to reduce the distance between the trays and so increase the number of trays that could be inspected by the screening device 130 and that could be delivered through the delivery conveyor 132.

Accordingly, the other sensor 117B and/or the secondary sensors 137 could be configured to identify the distance between two trays, for example by image recognition, during the feeding of the trays 115A, 115B, 115C to the screening device 120 and during the delivery of the trays 115A, 115B, 115C after the screening. The control unit 105 is also configured to control the velocity of the rollers 113 of both the divest conveyor 112 and the delivery conveyor at least partially based on the distance between two trays 115A, 115B, 115C on said conveyor determined using the corresponding sensors 117B, 137. Figures 9 and 10 show more specifically two configurations of the sensors 117B, 137 that could be used to provide such identification of the distance between two trays. In figure 9, the frame 118 is longitudinal to the digest conveyor 111 whereas in figure 10 each sensor is provided on a corresponding frame 118,

It must be noted that the sensors 117A, 117B, 127, 137 and the control unit 105 of the invention provides evolution to improve the efficiency of a security screening installation 100. As an illustration of such improvement, in case the delivery zone 111 includes several delivery emplacement, the control unit may be configured to control the delivery conveyor 132 to deliver a tray to an delivery emplacement on which the corresponding user 20 is located. According to this possibility the secondary sensors 137 installed on the at least one delivery lane130, and the control unit 105 is configured to,
- when the users 20 put their belongings 21A, 21B, 21C into trays 115A, 115B, 115C, each tray 115A, 115B, 115C) is associated with the user who had put is belongings in it using the at least one sensor,
- After a tray 115A, 115B, 115C has been screened through the screening device 120, by using the secondary sensor 137 identify on which delivery emplacement the corresponding user 20 is located, and deliver through the at least one delivering lane 140 the tray to said delivery emplacement.

As other examples, the control unit 105 could be configured to:
- Verify if a tray as been identify as clear during the screening procedure is effectively delivered to the delivered lane 130, and if a tray as being identify as suspect during the screening procedure is effectively delivered to the search lane 140, and/or
- Allow a dynamic control the feeding of the trays 115A, 115B, 115C to the screening device 130 (as example if a user has been identified as already pass to the delivery zone 131, the corresponding trays being prioritized for the screening);
- Verify, by image recognition, if a tray is damage 115A, 115B, 115C and automatically put it aside through the return conveyor 135,
- To give access to the faster divest lane 110 when users 20 have been identified as needed priority access (late for the boarding, disable user...),
- Provide data information regarding the security screening installation 100 such as:
   ∘ Total number of trays from divest,
   ∘ Average divesting times,
   ∘ Number of trays per user,
   ∘ Average image per user,
   ∘ Time lost due to badly loaded trays,
   ∘ Total trays screened,
   ∘ Total trays for search,
   ∘ Repack times when the belongings are delivered at the delivering zone
   ∘ Tray count in the system,
   ∘ Lost time due to tray blockages,
   ∘ Lost time due to tray starvation,
   ∘ Search times,
   ∘ Average screening time,
   ∘ Identification of best working teams.

Of course, the present embodiment shown on figure 3 is provided as an illustration of the invention and does not limit the scope of the invention. As an example, a security screening installation according to the invention could easily include one or several divest lanes 110 each one having one or several divest zones 111, one or several screening devices 120 and one or several delivery lanes 130 each one having one or several delivery zones 131 without departing of the scope of the invention. Similarly, each lane 110, 130, 140 could comprise one or several (or none for the delivery lanes and the search lanes) sensors, only one sensor being needed on the divest lane 110. Regarding the divest zone 111 and delivery zone 131, if each one includes in figure 3 respectively three divest emplacements and four delivery emplacements, a divest zone 111 and a delivery zone 131 could includes a number of divest/delivery emplacements that is less or upper than three or four without departing from the scope of the invention.

## Claims

1. Method for implementing a security screening installation (100), the security screening installation (100) comprising at least one divest lane (110) for users (20) to put their belongings (21A, 21B, 21C) into trays (115A, 115B, 115C), at least one screening device (120) feed by the at least one divest lane (110A) with the trays (115A, 115B, 115C), and at least one sensor (117A, 117B) installed on the at least one divest lane (110A) and configured to determine a state of packing of a tray (115A, 115B, 155C),
wherein the method for implementing a security screening installation (100) comprises the following steps:
D. Make the users (20) to put their belongings into trays (115A, 115B, 115C) on the at least one divest lane (110),
E. Detect using the at least one sensor (117A, 117B) if at least one tray (115A, 115B, 115C) has been incorrectly packed by identifying at least one from:
∘ an overheight object on a tray (115A, 115B, 115C),
∘ an object hanging out of a tray (115A, 115B, 115C),
∘ items that are loose on top of a tray (115A, 115B, 115C),
G. If an incorrectly packed tray (115A, 115B, 115C) is detecting, stop the corresponding divest lane (110),
H. Restart the corresponding divest lane (110) when, by using the at least one sensor, (117A, 117B) the incorrectly packed tray (115A, 115B, 115C) has been detected correctly packed.

2. Method for implementing a security screening installation (100) according to claim 1, wherein the at least one divest lane includes conveyor elements (113), such as rollers, for displacing the trays (115A, 115B, 115C) from a corresponding divest zone (111) to the at least one screening device (120),
wherein the method for implementing a security screening installation (100) further comprises, before the step F. of stopping the corresponding divest lane (110), the following step:
F. detect using the at least one sensor a user's hand (22) entering a danger zone (114) defined around the conveyor elements (112) of the at least one divest lane,
wherein:
- during the step G. the corresponding divest lane (110) is stopped if a hand entering a danger zone has been detected during step F.,
- During the step H., if the corresponding divest lane has been stopped when a hand (20) entering a danger zone (114) has been detected during step E., the corresponding divest lane (110) is restarted when a removing of the hand (22) from the danger zone (114) has been detected using the at least one sensor (117A, 117B).

3. Method for implementing a security screening installation (100) according to claim 1 or 2, wherein the security screening installation comprises at least one reading device (152) for reading at least one document relative to the user (20) before the user (20) access to the at least one divest lane (110), and at least one display (155) for displaying information regarding the at least one divest lane (110),
Wherein the method for implementing a security screening installation (100) further comprises the following step:
A. When the at least one reading device (152) reads the at least one document relative to the user (20), identify a language relative to the document relative to the user (20),
B. Detecting when the user (20) is looking on the at least one display (155),
C. When the user (20) is detecting has looking to the at least one display (155), display information regarding the at least one divest lane (110) in the identified language through the at least one display (155).

4. Method for implementing a security screening installation (100) according to claim 3, wherein the security screening installation (100) comprises at least two divest lanes (110) and at least one respective sensor (117A, 117B) for each divest lane (110), and wherein during the step C. of displaying information, the user (20) is directed to one of the at least two divest lanes based on the information provided by the respective sensor (117A, 117B) of the at least two divest lanes (110).

5. Method for implementing a security screening installation (100), wherein the installation further comprises at least one delivery lane (130) for delivering the trays (115A, 115B, 115C) to the users (20) after the trays (115A, 115B, 115C) has been screened through the screening device (120), and at least one secondary sensor (137) installed on the at least one delivery lane (130),
Wherein in step D. when the user (20) put their belongings (21A, 21B, 21C) into trays (115A, 115B, 115C) each tray is associated with the user who had put is belongings in it,
The method further comprising the following step:
I. After a tray (115A, 115B, 115C) has been screened through the screening device and has been delivered through the at least one delivering lane, for each tray (115A, 115B, 115C), detect if the user (20) that discharge said tray is the one associated with it,
J. If a tray (115A, 115B, 115C) is detected as discharged by a user (20) that is not associated with it, provide a warning regarding a potential theft of the belongings of a user (20).

6. Security screening installation (100) comprising:
- at least one divest lane (110) for users (20) to put their belongings into trays (115A, 115B, 115C),
- at least one screening device (120) feed by the at least one divest lane (110) with the trays (115A, 115B, 115C),
- at least one sensor (117A, 117B) installed on the at least one divest lane (110), the security screening installation (100) **being characterized in that** the at least one sensor is configured to determine a state of packing of a tray (115A, 115B, 115C), and **in that** Security screening installation (100) further comprises at least one control unit (105) configured to control the at least one divest lane (110) and to connect to the at least one sensor (117A, 117B),
the control unit (105) being further configured for:
- after the user (20) has put its belongings (21A, 21B, 21C) into trays (115A, 115B, 115C) on the divest lane (110), checking through the connection with the at least one sensor (117A, 117B) if that at least one tray (115A, 115B, 115C) have been incorrectly packed by identifying at least one from:
∘ an overheight object (21A) on a tray (115A, 115B, 115C),
∘ an object hanging (21B, 21C) out of a tray (115A, 115B, 115C),
∘ items that are loose on top of a tray (115A, 115B, 115C),
- if an incorrectly packed tray (115A, 115B, 115C) is identified, stopping the corresponding divest lane (110),
- to restart the corresponding divest lane (110) when, by using the at least one sensor (117A, 117B), the incorrectly packed tray (115A, 115B, 115C) has been detected correctly packed.

7. Security screening installation (100) according to claim 6, wherein the at least one sensor (117A, 117B) comprises a camera installed above the divest lane (110), the control unit (105) being configured to detect based on image recognition the packing state of a tray (115A, 115B, 115C).

8. Security screening installation (100) according to claim 6 or 7, wherein the at least one divest lane (110) comprises rollers (113) for feeding the trays (115A, 115B, 115C) after users (20) have put their belongings into trays and wherein the at least one sensor (117A, 117B) is also configured to identify the distance between two trays (115A, 115B, 115C) during the feeding of the trays (115A, 115B, 115C) to the screening device (120), wherein at least one control unit (105) is configured to control the velocity of the rollers (113) at least partially based on the distance between two trays (115A, 115B, 115C) determined using the at least one sensor (117A, 117B).

9. Security screening installation (100) according to any one from claim 6 to 7, wherein the at least one divest lane (110) comprises conveyor elements, such as rollers (113), for feeding the trays (115A, 115B, 115C) after users (20) have put their belongings into trays and wherein the at least one sensor (117A, 117B) is also configured to detect hand (22) entering a danger zone (114) defined around the conveyor elements of the at least one divest lane (110),
Wherein the control unit (105) is further configured to:
- detect using the at least one sensor if a hand (22) entering the danger zone (114) defined around the conveyor elements,
- stop the corresponding divest lane if a hand has been detected entering the danger zone (114) defined around the conveyor elements,
- restart the corresponding divest lane when a removing of the hand (22) from the danger zone (114) has been detected using the at least one sensor (117A, 117B).

10. Security screening installation (100) according to any one from claims 6 to 9 comprising at least one reading device (152) for reading at least one document relative to the user (20) before the user (20) access to the at least one divest lane (110), and at least one display (155) for displaying information regarding the at least one divest lane (110),
wherein the control unit (105) is further configured to connect to the reading device and to control the displaying of the at least one display (155),
the control unit (105) being further configured to
- when the at least one reading device (152) reads the at least one document relative to the user (20), identify a language relative to the document relative to the user (20),
- detect when the user (20) is looking on the at least one display (155),
- when the user (20) is detecting has looking to the at least one display (155), display information regarding the at least one divest lane (110) in the identified language through the at least one display (155).

11. Security screening installation (100) according to any one from claims 6 to 10, further comprising at least one delivery lane (130) for delivering the trays (115A, 115B, 115C) to the users (20) after the trays (115A, 115B, 115C) has been screened through the screening device (120), and at least one secondary sensor (137) installed on the at least one delivery lane (130), the control unit (105) being further configured to connect to the at least one secondary sensor (137),
Wherein the control unit (105) is further configured to,
- when the users (20) put their belongings (21A, 21B, 21C) into trays (115), each tray (115A, 115B, 115C) is associated with the user who had put is belongings in it using the at least one sensor,
- After a tray (115A, 115B, 115C) has been screened through the screening device (120) and has been delivered through the at least one delivering lane (140), for each tray (115A, 115B, 115C), detect, using the at least one secondary sensor (137), if the user (20) that discharge said tray is the one associated with it,
- If a tray (115A, 115B, 115C) is detected as discharged by a user (20) that is not associated with it, provide a warning regarding a potential theft of the belongings of a user (20).

12. Security screening installation (100) according to any one from claims 6 to 10, further comprising at least one delivery lane (130) for delivering the trays (115A, 115B, 115C) to the users (20) after the trays (115A, 115B, 115C) has been screened through the screening device (120), and at least one secondary sensor (137) installed on the at least one delivery lane (130), the delivery lane including several delivery emplacements, the control unit (105) being further configured to connect to the at least one secondary sensor (137) and to control the delivery lane,
Wherein the control unit (105) is further configured to,
- when the users (20) put their belongings (21A, 21B, 21C) into trays (115), each tray (115) is associated with the user who had put is belongings in it using the at least one sensor,
- After a tray (115A, 115B, 115C) has been screened through the screening device (120), by using the secondary sensor (137) identify on which delivery emplacement the corresponding user (20) is located, and deliver through the at least one delivering lane (140) the tray to said delivery emplacement.

13. Security screening installation (100) according to claim 11 or 12, wherein each tray (115A, 115B, 115C) comprises a tag, such as a RFID tag or QR code tag, the at least one sensor (117A, 117B) and the at least one secondary sensor (137) being configured to read the tag of trays (115A, 115B, 115C) in order to associate a tray (115A, 115B, 115C) with a user (20).

14. Security screening installation (100) according to claim 11 or 12, wherein the at least one sensor (117A, 117B) and the at least one secondary sensor (137) are configured to identify a tray (115A, 115B, 115C) based on the user's belongings and their arrangement into the tray (115A, 115B, 115C).

15. Security screening installation (100) according to any one from claims 11 to 14, wherein the at least one sensor (117A, 117B) and the at least one secondary sensor (137) being configured to identify a user (20) based on facial recognition.
